Europäisches Patentamt

European Patent Office

Office européen des brevets

(11) Publication number: **0 240 084 B1**

(12) **EUROPEAN PATENT SPECIFICATION**

(45) Date of publication of patent specification: **02.09.92** (51) Int. Cl.⁵: **A01D 34/76**

(21) Application number: **87200586.3**

(22) Date of filing: **30.03.87**

Divisional application 90203045.1 filed on 30/03/87.

(54) **Gear mounting apparatus and disc cutter rotor assembly.**

(30) Priority: **31.03.86 US 846651**
**31.03.86 US 846655**

(43) Date of publication of application:
**07.10.87 Bulletin 87/41**

(45) Publication of the grant of the patent:
**02.09.92 Bulletin 92/36**

(84) Designated Contracting States:
**DE FR GB**

(56) References cited:
**EP-A- 0 060 600      EP-A- 0 175 629**
**FR-A- 1 562 886      FR-A- 2 188 743**
**FR-A- 2 255 835      FR-A- 2 302 677**
**FR-A- 2 530 115      GB-A- 2 068 703**
**US-A- 4 141 202**

(73) Proprietor: **FORD NEW HOLLAND, INC. (a Delaware corp.)**
**500 Diller Avenue**
**New Holland Pennsylvania 17557(US)**

(72) Inventor: **Koch, Earl E.**
**Route 2**
**Mohnton, PA 19540(US)**
Inventor: **Voler, Franja F.**
**395 Valley View Drive**
**New Holland, PA 17557(US)**
Inventor: **Howell, Edmund O.**
**Route 3**
**New Holland, PA 17557(US)**

(74) Representative: **Vandenbroucke, Alberic T.J.**
**FORD NEW HOLLAND N.V. Leon Claeysstraat 3A**
**B-8210 Zedelgem(BE)**

## Description

The present invention relates generally to a disc cutterbar for severing standing crop material by impact action and which utilizes intermeshing gears for the transmission of rotary power between the disc cutter rotary assemblies thereof. Specifically, the present invention is concerned with a mounting apparatus for rotatably mounting an idler gear between the upper and lower surface portions of the transmission casing of such a disc cutterbar.

Disc cutterbars of the type as illustrated in FR-A-1.562.886 and EP-A-0.060.600 and utilizing a plurality of intermeshed gears to transfer rotational power through the transmission casing to the rotatably mounted disc cutter units, typically are provided with a pair of idler gears rotatably mounted within the transmission casing between each pair of adjacent disc cutter assemblies. The purpose of this transmission gear configuration is to provide opposing directions of rotation for adjacent disc cutter units.

Because of the precise nature of the intermeshed transmission gears in such disc cutterbars, the location of the idler gear mounting is particularly critical. Furthermore, due to the forces imposed on the idler gear mountings, deformation problems are also encountered. With the current tendency to manufacture cutterbars with a low, thin profile to keep the cutting members close to the surface of the ground for minimizing the impedance to the flow of severed crop material over the surface of the disc cutters, a substantial mounting of the idler gears to maintain proper centres and alignment is required.

This ideal idler gear mounting is not accomplished with the arrangement according to FR-A-1.562.886 which furthermore also fails to provide a cutterbar with a sufficiently low profile. On the other hand, the arrangement according to EP-A-0.060.600 also has a profile which is higher than what presently is acceptable and moreover has only very limited serviceability to the extent that the idler gears thereof are not easily removable from the assembly.

Accordingly, it is the object of the present invention to provide a substantial gear mounting apparatus in a thin profile transmission casing of a disc cutterbar and which, while maintaining ease of serviceability, also enables proper maintaining of the manufacturing centres and alignment of the gears in the power transmission train even when, in operation, high forces are imposed on the various components.

According to the invention, a disc cutterbar is provided for severing standing crop material from the ground and which has a plurality of disc cutter assemblies rotatably mounted on a transmission casing housing a plurality of intermeshed power transmission gears including a drive gear associated with each respective disc cutter assembly to effect rotation thereof and idler gears positioned between the drive gears to transfer rotational power therebetween; each one of said idler gears being rotatably mounted within the transmission casing by a mounting apparatus extending between upper and lower surface portions of said casing and comprising:

- a spacer member positioned within a mounting opening through the transmission casing and radially engaging, on the one hand, a bearing assembly rotatably supporting the corresponding idler gear and, on the other hand, one of the surface portions of the transmission casing; said spacer member further also having a lip portion engageable with said one of the casing surface portions to provide support for said spacer member generally in its axial direction;
- a securing member having a lip portion engageable with the other of the casing surface portions to provide support for said securing member generally in its axial direction; and
- a fastener releasably coupling the spacer member and the securing member to each other to tightly fix the mounting apparatus in place relative to the transmission casing; and
    said disc cutterbar being characterized in that:
- the spacer member further also radially engages said other one of the casing surface portions of the transmission casing to provide additional radial support for the corresponding idler gear; and
- both the upper and lower surface portions of the transmission casing have corresponding indentations through which the mounting opening passes and for respectively receiving the lip portions of the spacer member and the securing member therein.

In a preferred embodiment, one of said spacer and securing members has a recessed portion and the fastener is in the form of a bolt extending through said one of said spacer and securing members. Said bolt has a head portion which engages said one of said spacer and securing members within said recessed portion thereof and threadably engages the other one of said spacer and securing members. O-rings associated with the spacer member and the securing member seal the mounting apparatus to prevent the leakage of fluid from the transmission casing. The indentations in the transmission casing are so that the idler gear mounting apparatuses do not substantially project above or below the surfaces of the transmission casing on the one hand and the inner races of the bearing assemblies rotatably mounting the idler gears on the corresponding spacer members may be tightly clamped between said indentations in the upper and lower surface portions of the casing on the other hand.

The present invention thus provides spacer members which extend completely through the transmission casing to engage both the upper and lower surfaces thereof whereby both the upper and lower surfaces of the casing provide radial support for the idler gears and thus a substantial mounting of the idler gears is obtained. This, in turn ensures that the manufacturing centres and alignment of the idler gears in the power transmission train are properly maintained. Yet this mounting apparatus also maintains an ease of serviceability, is durable in construction, inexpensive of manufacture, facile in assemblage and simple and effective in use.

The advantages of this invention will become apparent upon consideration of the following detailed disclosure of the invention, especially when taken in conjunction with the accompanying drawings, wherein:

Fig. 1 is a top plan view of a disc mower-conditioner incorporating the principles of the instant invention;

Fig. 2 is a left side elevational view of the disc mower-conditioner seen in Fig. 1;

Fig. 3 is a view of the disc cutterbar as seen along lines 3-3 of Fig. 2, with the extraneous harvester structure removed;

Fig. 4 is a top plan view of the disc cutterbar seen in Fig. 3;

Fig. 5 is an enlarged partial cross-sectional view of the disc cutterbar taken along lines 5-5 of Fig. 4; and

Fig. 6 is an enlarged cross-sectional view of the cutterbar taken along lines 6-6 of Fig. 5 to show the structural details of the idler gear mounting apparatus.

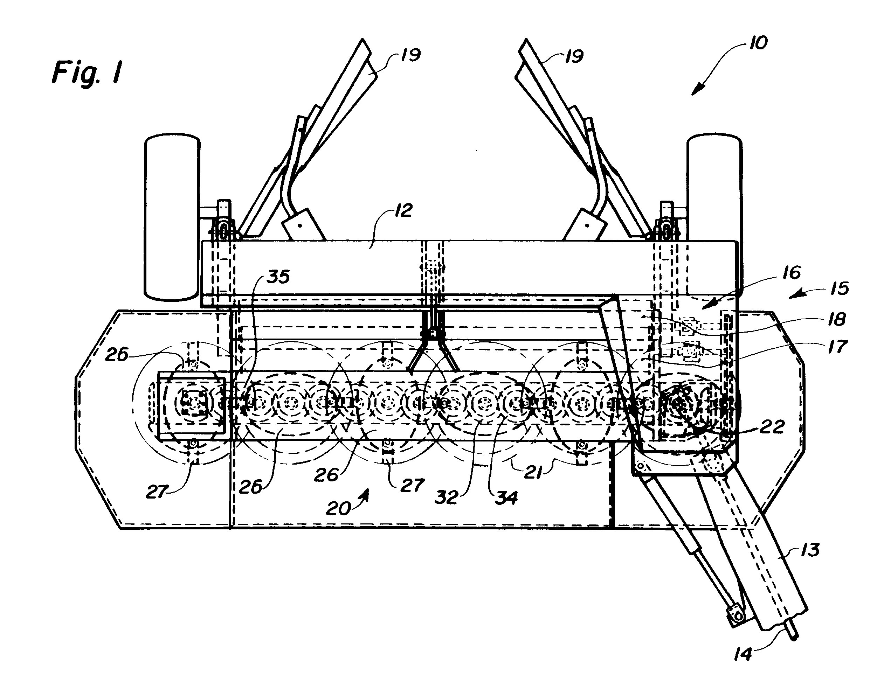

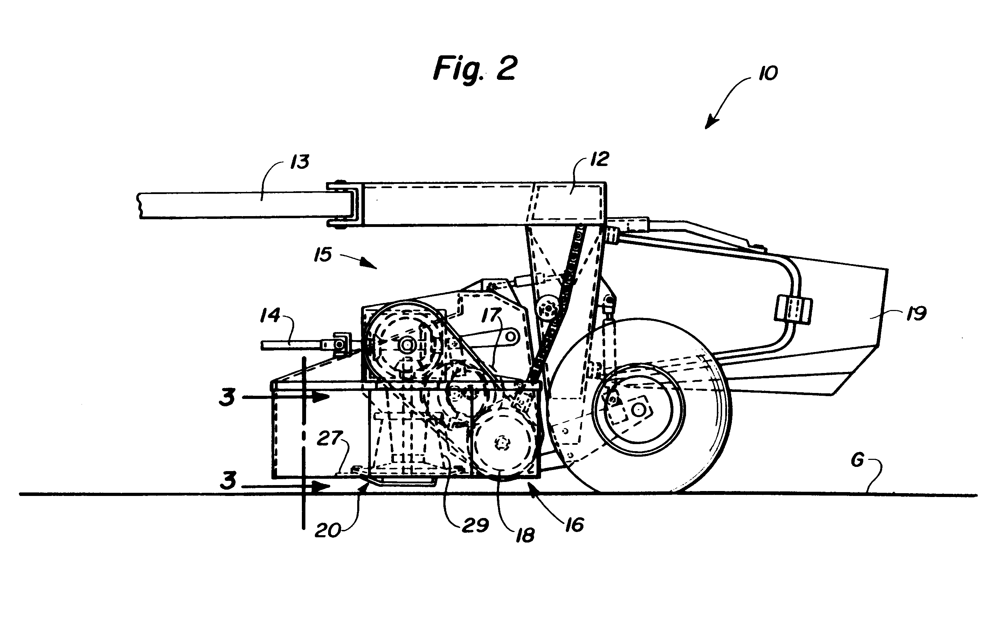

Referring now to the drawings and, particularly, to Fig. 1, a top plan view of a crop harvesting machine, commonly referred to as a disc mower-conditioner, incorporating the principles of the instant invention, can be seen. As best seen in Figs. 1 and 2, the disc mower-conditioner 10 is supported over the ground G by a wheeled frame 12. The embodiment as shown in the drawings is commonly referred to as a pull-type machine and, therefore, is equipped with a draft tongue 13 and a PTO driveline 14 to input rotational power from a pulling tractor (not shown).

The machine 10 is provided with a header 15 floatingly supported from the frame 12 in a conventional manner. The header 15 is provided with a disc cutterbar 20, described in further detail below, and a conditioning mechanism 16, including an upper roll 17 and a lower roll 18, positioned immediately rearwardly of the cutterbar 20 to receive and condition severed crop. Conditioned crop material which is discharged from the conditioning mechanism 16 is engaged with the rearwardly converging baffle shields 19 that deposit this conditioned crop into a consolidated windrow upon the ground G in a conventional manner.

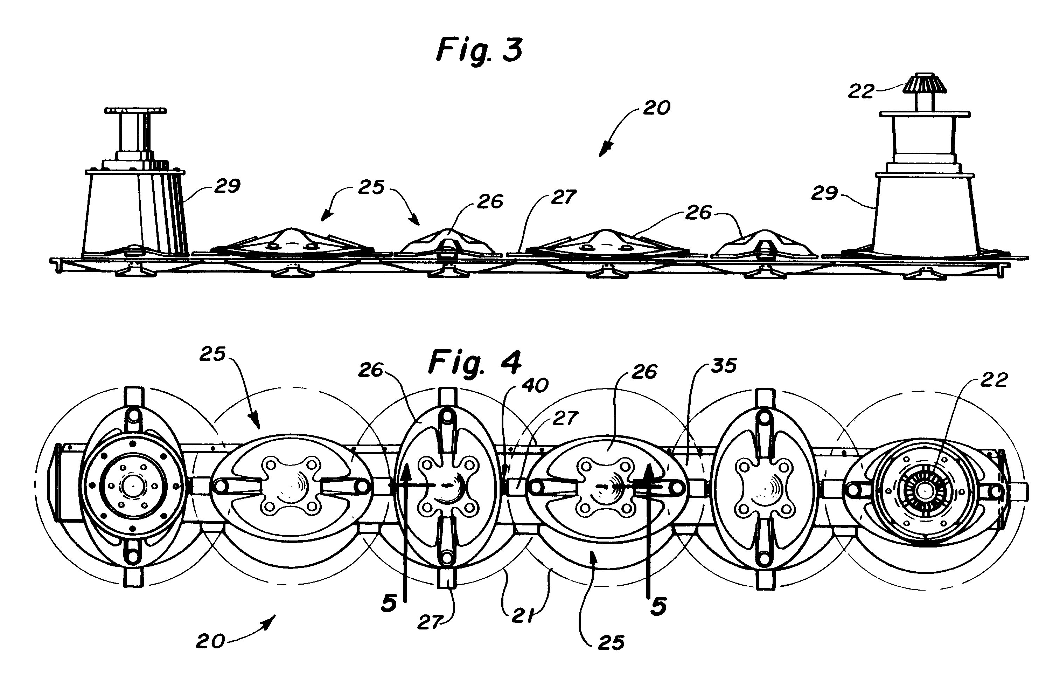

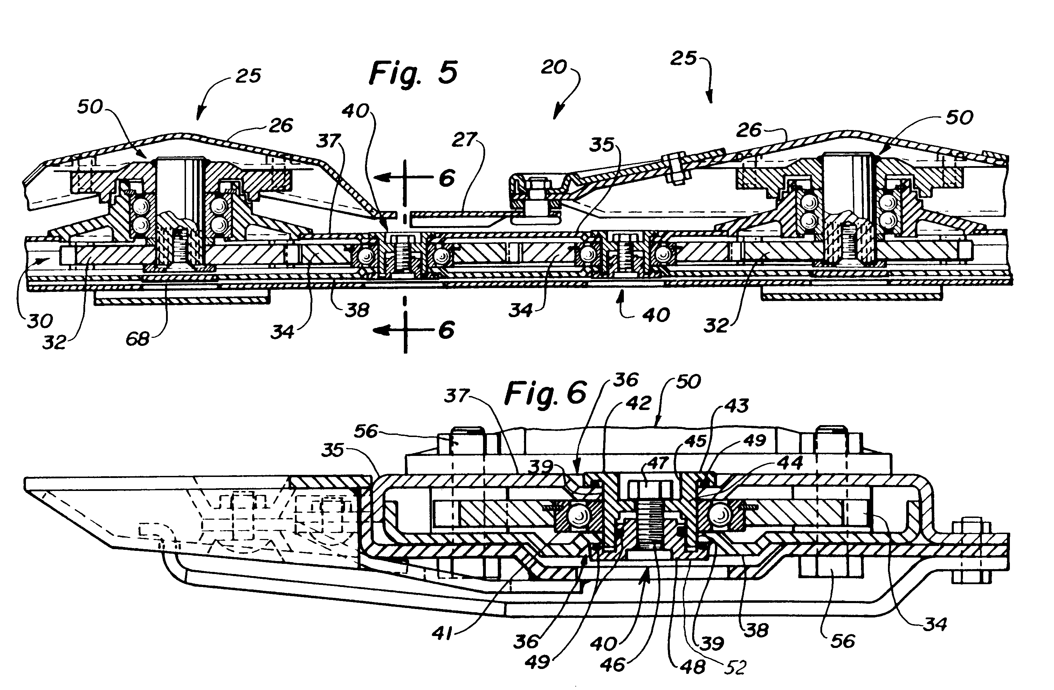

An overall view of the disc cutterbar 20 is best seen in Figs. 3 and 4. The power input shaft 22 receives rotational power from the PTO driveline 14 and transfers the rotational power through a series of intermeshing power transmission gears described in greater detail below and rotatably powers the operation of the disc cutter assemblies 25, each of which has a pair of outwardly extending knives 27 that engage the standing crop material and, by rotation along a circular path exhibited by the arc 21, affect a severing thereof from the ground. The disc cutter assemblies 25 at the respective ends of the cutterbar 20 are provided with a hat-shaped divider drum 29 to facilitate the flow of crop material over the cutterbar 20 and inwardly toward the conditioning mechanism 16.

Referring now to Figs. 3-6, particularly to Fig. 5, the structural details of the power transmission train 30 and the disc cutterbar 20 can best be seen. Each disc cutter assembly 25 is provided with a detachably connected cutter disc 26 which carries the knives 27 for engagement with the standing crop material. The power input shaft 22 delivers rotational power to a power transmission train 30, including a drive gear 32 associated with each respective disc cutter assembly 25 and a pair of idler gears 34 mounted between adjacent drive gears 32. The provision of two idler gears 34 between adjacent drive gears 32 permits the adjacent disc cutter assemblies 25 to be rotated in opposing directions.

Referring now to Figs. 5 and 6, the idler gear mounting apparatus 40 can best be seen. The transmission casing 35 is formed with an indentation 36 in both the upper surface portion 37 and the lower surface portion 38 through which the mounting hole 39 passes. Each idler gear 34 is rotatably mounted on the apparatus 40 by a bearing assembly 41. The mounting apparatus 40 includes a spacer member 42 having a lip portion 43 and a shank portion 44 defining a recessed portion 45. The spacer member 42 extends completely through the mounting hole 39 in the transmission casing 35 and engages both the upper surface portion 37 and the lower surface portion 38 along its shank portion 44 to provide radial support for the spacer member 42 and thus the mounting apparatus 40. The inner race of the bearing assembly 41 is mounted on the shank portion 44 of the spacer member 42 between the upper surface portion 37 and the lower surface portion 38.

To fix the mounting apparatus 40 in place on the transmission casing 35, a bolt 46 passes through the spacer member 42 such that the head portion 47 of the bolt 46 is received within the recessed portion 45 of the spacer member 42. A specially formed securing member 48 including a lip portion 52 for engagement with the lower surface portion 38 of the casing 35, is threadably engaged with the bolt 46 to tightly draw the mounting apparatus 40 together. The securing member 48 engages the lower surface portion 38 of the transmission casing 35 while that the lip portion 43 of the spacer member 42 engages the upper surface portion 37 of the transmission casing 35 to permit the mounting apparatus 40 to squeeze the casing 35 against the bearing assembly 41. The special shape of the securing member 48 fits within the shank portion 44 of the spacer member 42 and extends outwardly thereof to engage with its lip portion 52 the lower surface portion 38 of the casing 35. O-rings 49 positioned between the lip portion 43 and the upper surface portion 37, as well as between the securing member 48 and the lower surface portion 38 and between the securing member 48 and the shank portion 44 seal the idler gear mounting apparatus 40 against the transmission casing 35 to prevent the loss of lubricating fluid from within the casing 35.

The idler gear mounting apparatus 40 thus described permits a stable, substantial mounting for the idler gear 34 while also permitting an ease of serviceability to the bearings 41 and gears 34.

It will be understood that changes in the details, which have been described and illustrated to explain the nature of the invention, will occur to and may be made by those skilled in the art upon a reading of this disclosure. As an example, it will be appreciated that the securing member 48 rather than the spacer member 42 may be provided with a recessed portion 45 for receiving the head portion 47 of the bolt 46, which, in this case threadably engages with the spacer member 42 rather than with the securing member 48.

## Claims

1. A disc cutterbar (20) for severing standing crop material from the ground having a plurality of disc cutter assemblies (25) rotatably mounted on a transmission casing (35) housing a plurality of intermeshed power transmission gears (30) including a drive gear (32) associated with each respective disc cutter assembly (25) to effect rotation thereof and idler gears (34) positioned between the drive gears (32) to transfer rotational power therebetween; each one of said idler gears (34) being rotatably mounted within the transmission casing (35) by a mounting apparatus (40) extending between upper and lower surface portions (37,38) of said casing (35) and comprising:
   - a spacer member (42) positioned within a mounting opening (39) through the transmission casing (35) and radially engaging, on the one hand, a bearing assembly (41) rotatably supporting the corresponding idler gear (34) and, on the other hand, one of the surface portions (37, 38) of the transmission casing (35); said spacer member (42) further also having a lip portion (43) engageable with said one of the casing surface portions (37, 38) to provide support for said spacer member (42) generally in its axial direction;
   - a securing member (48) having a lip portion (52) engageable with the other of the casing surface portions (37, 38) to provide support for said securing member (48) generally in its axial direction; and
   - a fastener (46) releasably coupling the spacer member (42) and the securing member (48) to each other to tightly fix the mounting apparatus (40) in place relative to the transmission casing (35); and
   said cutterbar (20) being characterized in that:
   - the spacer member (42) further also radially engages said other one of the casing surface portions (37, 38) of the transmission casing (35) to provide additional radial support for the corresponding idler gear (34); and
   - both the upper and lower surface portions (37, 38) of the transmission casing (35) have corresponding indentations (36) through which the mounting opening (39) passes and for respectively receiving the lip portions (43, 52) of the spacer member (42) and the securing member (48) therein.

2. A disc cutterbar (20) according to claim 1 characterized in that said spacer member (42) and said securing member (48) are sealingly engaged with the transmission casing (35) to prevent a loss of lubricating fluid therefrom.

3. A disc cutterbar (20) according to claim 2 characterized in that :
   - the spacer member (42) comprises a shank portion (44) radially engaging the upper and lower surface portions (37, 38) of the transmission casing (35) within said mounting opening (39) therein and
   - the inner race of the bearing assembly (41) is mounted on the shank portion (44) between said upper and lower surface portions (37, 38) in a manner to permit the mounting apparatus (40) to squeeze said inner race between these upper and lower surface portions (37, 38) at said indentations (36) therein.

4. A disc cutterbar (20) according to any of the preceding claims characterized in that the spacer member (42) comprises a recessed portion and the securing member (48) has a portion which radially engages the spacer member (42) within said recessed portion thereof.

5. A disc cutterbar (20) according to claim 4 characterized in that the spacer member (42) and the securing member (48) sealingly engage each other to prevent a loss of lubricating fluid from the transmission casing (35).

6. A disc cutterbar (20) according to any of the preceding claims characterized in that :
   - one of said spacer and securing members (42, 48) has a recessed portion (45); and
   - the fastener (46) is in the form of a bolt extending through said one of said spacer and securing members (42, 48); said bolt having a head portion (47) engaging said one of said spacer and securing members (42, 48) within said recessed portion (45) thereof and threadably engaging the other one of said spacer and securing members (42, 48).

**Patentansprüche**

1. Scheibenmäher-Mähbalken (20) zum Mähen von stehendem Erntematerial vom Boden, mit einer Mehrzahl von Scheibenmäher-Baugruppen (25), die drehbar auf einem Getriebegehäuse (35) befestigt sind, das eine Mehrzahl von miteinander kämmenden Kraftübertragungszahnrädern (30) umgibt, unter Einschluß eines jeder jeweiligen Scheibenmäherbaugruppe (25) zu deren Drehantrieb zugeordneten Antriebszahnrades (32) und von Leerlaufzahnrädern (34), die zwischen den Antriebszahnrädern (32) angeordnet sind, um eine Drehantriebskraft zwischen diesen zu übertragen, wobei jedes der Leerlaufzahnräder (34) drehbar in dem Getriebegehäuse (35) durch eine Befestigungsvorrichtung (40) befestigt ist, die sich zwischen oberen und unteren Oberflächenteilen (37, 38) des Gehäuses (35) erstreckt und folgende Teile umfaßt:
   - ein Abstandsstück (42), das in einer Befestigungsöffnung (39) durch das Getriebegehäuse (35) hindurch angeordnet ist und in Radialrichtung einerseits mit einer Lagerbaugruppe (41), die das entsprechende Leerlaufzahnrad (34) drehbar lagert, und andererseits mit einem der Oberflächenteile (37, 38) des Getriebegehäuses (35) in Eingriff steht, wobei das Abstandsstück (42) weiterhin einen Lippenabschnitt (43) aufweist, der mit dem einen der Gehäuse-Oberflächenteile (37, 38) in Eingriff bringbar ist, um eine Abstützung für das Abstandsstück (42) allgemein in seiner Axialrichtung zu schaffen,
   - ein Befestigungsstück (48) mit einem Lippenabschnitt (52), der mit dem anderen der Gehäuse-Oberflächenteile (37, 38) in Eingriff bringbar ist, um eine Abstützung für das Befestigungsstück (48) allgemein in seiner Axialrichtung zu schaffen, und
   - ein Befestigungselement (46), das das Abstandsstück (42) und das Befestigungsstück (48) lösbar miteinander verbindet, um die Befestigungsvorrichtung (40) fest an ihrem Platz bezüglich des Getriebegehäuses (35) festzulegen, und wobei der Mähbalken (20) dadurch **gekennzeichnet** ist, daß
   - das Abstandsstück (42) weiterhin in Radialrichtung mit dem anderen der Gehäuse-Oberflächenteile (37, 38) des Getriebegehäuses (35) in Eingriff steht, um eine zusätzliche radiale Abstützung für das entsprechende Leerlaufzahnrad (34) zu schaffen, und
   - sowohl der obere als auch der untere Oberflächenteil (37, 38) des Getriebegehäuses (35) entsprechende Vertiefungen (36) aufweisen, durch die die Befestigungsöffnung (39) hindurchläuft und die jeweils die Lippenabschnitte (43, 52) des Abstandsstücks (42) und des Befestigungsstücks (48) aufnehmen.

2. Scheibenmäher-Mähbalken (20) nach Anspruch 1, dadurch **gekennzeichnet,** daß das Abstandsstück (42) und das Befestigungsstück (48) in Dichtungseingriff mit dem Getriebegehäuse (35) stehen, um einen Schmiermittelverlust aus diesem zu verhindern.

3. Scheibenmäher-Mähbalken (20) nach Anspruch 2, dadurch **gekennzeichnet,** daß:
   - das Abstandsstück (42) einen Schaftabschnitt (44) umfaßt, der in Radialeingriff mit den oberen und unteren Oberflächenteilen (37, 38) des Getriebegehäuses (35) innerhalb der darin ausgebildeten Befestigungsöffnung (39) steht, und

- der innere Lagerring der Lagerbaugruppe (41) auf dem Schaftabschnitt (44) zwischen den oberen und unteren Oberflächenteilen (37, 38) derart befestigt ist, daß die Befestigungsvorrichtung (40) den Lagerinnenring zwischen diesen oberen und unteren Oberflächenteilen (37, 38) an den Vertiefungen zusammendrücken kann.

4. Scheibenmäher-Mähbalken (20) nach einem der vorhergehenden Ansprüche, dadurch **gekennzeichnet,** daß das Abstandsstück (42) einen mit einer Ausnehmung versehenen Abschnitt aufweist, und daß das Befestigungsstück (48) einen Abschnitt aufweist, der in Radialrichtung mit dem Abstandsstück (42) in dessen Ausnehmungsabschnitt in Eingriff steht.

5. Scheibenmäher-Mähbalken (20) nach Anspruch 4, dadurch **gekennzeichnet,** daß das Abstandsstück (42) und das Befestigungsstück (48) in Dichtungseingriff miteinander stehen, um einen Verlust an Schmiermittel aus dem Getriebegehäuse(35) zu verhindern.

6. Scheibenmäher-Mähbalken (20) nach einem der vorhergehenden Ansprüche, dadurch **gekennzeichnet,** daß:
   - entweder das Abstandsstück (42) oder das Befestigungsstück (48) einen mit einer Ausnehmung versehenen Abschnitt (45) aufweisen, und
   - das Befestigungselement (46) die Form einer Schraube aufweist, die sich entweder durch das Abstandsstück (42) oder das Befestigungsstück (48) erstreckt, wobei die Schraube einen Kopfabschnitt (47) aufweist, der mit dem Abstandsstück (42) oder dem Befestigungsstück (48) in dem mit einer Ausnehmung versehenen Abschnitt (45) in Eingriff steht, und in das Befestigungsstück (48) oder das Abstandsstück (42) eingeschraubt ist.

**Revendications**

1. Barre de coupe à disques (20) destinée à séparer du sol des produits de récolte sur pied, possédant plusieurs ensembles de coupe à disque (25) montés rotatifs sur un carter de transmission (35) qui loge plusieurs roues dentées de transmission d'énergie (30) engrenées les unes avec les autres comportant une roue dentée menante (32) associée à chaque ensemble de coupe à disque (25) correspondant pour effectuer une rotation de celui-ci et des roues dentées folles (34) positionnées entre les roues dentées menantes (32) pour transmettre une énergie de rotation entre celles-ci; chacune desdites roues dentées folles (34) étant montée rotative à l'intérieur du carter de transmission (35) à l'aide d'un dispositif de montage (40) qui s'étend entre des parties de surface supérieure et inférieure (37, 38) dudit carter (35) et qui comprend :

   - un organe d'espacement (42) positionné à l'intérieur d'un orifice de montage (39) ménagé à travers le carter de transmission (35) et venant en prise radialement, d'une part, avec un ensemble de roulement (41) supportant mobile en rotation la roue dentée folle (34) correspondante et, d'autre part, avec l'une des parties de surface (37, 38) du carter de transmission (35); ledit organe d'espacement (42) possédant également une partie formant lèvre (43) apte à venir en prise avec ladite partie de surface de carter (37, 38) en vue de définir un support pour ledit organe d'espacement (42), d'une manière générale, dans sa direction axiale;
   - un organe d'assujettissement (48) possédant une partie formant lèvre (52) apte à venir en prise avec l'autre partie de surface de carter (37, 38) en vue de définir un support pour ledit organe d'assujettissement (48), d'une manière générale, dans sa direction axiale; et
   - un organe de fixation (46) accouplant d'une manière amovible l'organe d'espacement (42) et l'organe d'assujettissement (48) l'un avec l'autre pour fixer solidement le dispositif de montage (40) en place par rapport au carter de transmission (35); et
   
   ladite barre de coupe (20) étant caractérisée en ce que :
   - l'organe d'espacement (42) vient également en prise radialement avec ladite autre partie de surface de carter (37, 38) du carter de transmission (35) en vue de définir un support radial supplémentaire pour la roue dentée folle (34) correspondante; et
   - les deux parties de surface supérieure et inférieure (37, 38) du carter de transmission (35) possèdent des renfoncements (36) correspondants que traverse l'orifice de montage (39) et destinés à recevoir en eux respectivement les parties formant lèvres (43, 52) de l'organe d'espacement (42) et de l'organe d'assujettissement (48).

2. Barre de coupe à disques (20) selon la revendication 1, caractérisée en ce que ledit organe d'espacement (42) et ledit organe d'assujettissement (48) sont en prise d'une manière étanche avec le carter de transmission (35) pour empêcher une perte de fluide lubrifiant à partir de celui-ci.

3. Barre de coupe à disques (20) selon la revendication 2, caractérisée en ce que :
   - l'organe d'espacement (42) comporte une partie formant corps (44) qui vient en prise radialement avec les parties de surface supérieure et inférieure (37, 38) du carter de transmission (35) à l'intérieur dudit orifice de montage (39) ménagé dans celui-ci, et
   - le chemin de roulement intérieur de l'ensemble de roulement (41) est monté sur la partie formant corps (44), entre lesdites parties de surface supérieure et inférieure (37, 38), de façon que le dispositif de montage (40) puisse serrer ledit chemin de roulement intérieur entre ces parties de surface supérieure et inférieure (37, 38) au niveau desdits renfoncements (36) définis dans celles-ci.

4. Barre de coupe à disques (20) selon l'une quelconque des revendications précédentes, caractérisée en ce que l'organe d'espacement (42) comporte une partie en creux, tandis que l'organe d'assujettissement (48) possède une partie qui vient en prise radialement avec l'organe d'espacement (42) à l'intérieur de ladite partie en creux de celui-ci.

5. Barre de coupe à disques (20) selon la revendication 4, caractérisée en ce que l'organe d'espacement (42) et l'organe d'assujettissement (48) viennent en prise l'un avec l'autre d'une manière étanche pour empêcher une perte de fluide lubrifiant à partir du carter de transmission (35).

6. Barre de coupe à disques (20) selon l'une quelconque des revendications précédentes, caractérisée en ce que :
   - l'un des éléments du groupe comprenant lesdits organes d'espacement et d'assujettissement (42, 48) présente une partie en creux (45); et

   - l'organe de fixation (46) se présente sous la forme d'un boulon qui s'étend à travers ledit élément du groupe comprenant lesdits organes d'espacement et d'assujettissement (42, 48); ledit boulon comportant une partie formant tête (47) qui vient en prise avec ledit élément du groupe comprenant lesdits organes d'espacement et d'assujettissement (42, 48) à l'intérieur de ladite partie en creux (45) de celui-ci, et venant en prise par vissage avec l'autre élément du groupe comprenant lesdits organes d'espacement et d'assujettissement (42, 48).

Fig. 1

EP 0 240 084 B1

Fig. 2

EP 0 240 084 B1

Fig. 3

Fig. 4

*Fig. 5*

*Fig. 6*

EP 0 240 084 B1